(19) Europäisches Patentamt / European Patent Office / Office européen des brevets

(11) **EP 1 715 325 B1**

(12) **EUROPEAN PATENT SPECIFICATION**

(45) Date of publication and mention
of the grant of the patent:
**16.06.2010 Bulletin 2010/24**

(51) Int Cl.:
*G01N 21/35* *(2006.01)*  *G01N 21/39* *(2006.01)*

(21) Application number: **05252479.0**

(22) Date of filing: **20.04.2005**

(54) **Method and apparatus for the detection of gas**

Verfahren und Vorrichtung zur Detektion von Gas

Procédure et dispositif pour la détection de gaz.

(84) Designated Contracting States:
**DE FR GB IT SE**

(43) Date of publication of application:
**25.10.2006 Bulletin 2006/43**

(73) Proprietor: **Honeywell Analytics AG**
**8610 Uster (CH)**

(72) Inventors:
• **Holker, Donald**
**Blandford Forum,**
**Dorset DT11 7RS (GB)**
• **Sutton, Stephen**
**Blandford Forum,**
**Dorset DT11 0JU (GB)**

(74) Representative: **Addison, Ann Bridget et al**
**Kilburn & Strode LLP**
**20 Red Lion Street**
**London WC1R 4PJ (GB)**

(56) References cited:
**WO-A-2004/025324**  **DE-A- 4 201 922**
**US-A- 5 345 306**  **US-A- 6 111 644**

• FUKUDA T ET AL: "Sensitivity of coherent range-resolved differential absorption lidar" APPLIED OPTICS USA, vol. 23, no. 12, 15 June 1984 (1984-06-15), pages 2026-2032, XP002344387 ISSN: 0003-6935
• SCHILT S ET AL: "Experimental method based on wavelength-modulation spectroscopy for the characterization of semiconductor lasers under direct modulation" APPLIED OPTICS OPT. SOC. AMERICA USA, vol. 43, no. 22, 1 August 2004 (2004-08-01), pages 4446-4453, XP002344388 ISSN: 0003-6935

**Description**

Industrial Field

The present invention relates to a method and apparatus for detecting gas and finds application in the infrared detection of gases, which term also includes vapours. The invention especially finds application in open path gas detectors that include a transmitter unit that transmits a beam of radiation across a path in a space being monitored and a receiver unit including a detector that detects the radiation that has passed across the space. The term "open path gas detector" is used to cover detection apparatus irrespective of the length of the path and irrespective of whether the path is open to atmospheric conditions and/or is enclosed.

Background Art

The use of non-dispersive infrared spectroscopy to detect hydrocarbon gases is well established. It essentially involves transmitting infrared radiation along a path in an area being monitored; the wavelength of the infrared radiation is chosen so that it is absorbed by the gas of interest (hereafter called the "target gas") but is not substantially absorbed by other gases in the atmosphere of the area being monitored. If monitoring out-of-doors, the selected wavelength ideally should not be absorbed by liquid or gaseous water (e.g. in the form of humidity, condensation, fog, rain or spray). The intensity of the radiation that has passed along the path in the area being monitored is measured and the attenuation in the intensity of the radiation gives a measure of the amount of target gas in the monitored area.

However, factors other than absorption by the target gas also attenuate the infrared radiation, including obscuration of the detecting beam, atmospheric scattering of the radiation, contamination of the detector surfaces, e.g. by dirt or condensation, and ageing of components. The reliability of infrared gas detectors is significantly improved by the use of a reference; such a reference is usually infrared radiation at a different wavelength, which ideally is a wavelength at which the target gas does not exhibit significant absorption. Radiation at more than one reference wavelength may be used; likewise more than one detection wavelength may be used. The ratio between the signal obtained at the wavelength(s) where the target gas does absorb (the "sample" wavelength(s)) and the signal obtained at the wavelength(s) where the target gas does not significantly absorb (the "reference" wavelength(s)) compensates for the attenuation caused by environmental conditions, since ideally the signal at the reference wavelength(s) and the signal at the sample wavelength(s) will both be affected to the same extent by any effects (other than the presence of target gas) that attenuate the radiation.

It is known to monitor the presence of toxic gases in an atmosphere using point gas detectors, which detect gas in an area close to the detector. (The term "toxic" gas in the context of the present specification means a gas or vapour other than oxygen, nitrogen and hydrocarbons, such as hydrogen sulphide, hydrogen fluoride, ammonia, sulphur dioxide, carbon dioxide and carbon monoxide). Such point gas detectors can be electrochemical or optical. However, when monitoring a large area, the use of point gas detectors gives rise to problems since the placing of numerous detectors throughout the area is expensive. Furthermore, if a build up of target gas takes place in a region located between the detectors, it will not be detected.

Open path gas detectors with a path length in excess of 1 metre, typically at least 10m, are also known and allow a much larger area to be monitored by a single instrument.

The use of open path gas detectors has been made more attractive by the ready availability at a reasonable price of tuneable laser diodes, which can be tuned to a very narrow wavelength to detect characteristic absorbency wavelengths of target toxic gases. However, the levels of toxic gas that must be detected are generally low, typically 5ppm (parts per million) and lower, e.g. 1ppm. At such low levels, the noise in the open path gas detector can be greater than the signal representing the target gas, making it very difficult to detect such low levels of toxic target gases. In addition, the detection signal can become indiscernible due to drift in electronic or optical components over time, variations in temperature and/or atmospheric conditions, etc. Further, the use of coherent laser irradiation from a tuneable laser diode can give rise to interference fringes, and this has been a problem because the variation in the intensity of the radiation between the bright and dark fringes far exceeds the signal arising from the presence of low levels of the target gas.

Accordingly, low cost reliable open path gas detectors for toxic gases for measuring target gas levels as low as 10ppm have hitherto been difficult to produce.

GB-2353591 describes an open path gas detector that uses a tuneable laser diode as a radiation source for directing a beam across a measuring path to a radiation detector in order to detect target gas within the path. The laser diode transmits radiation in a very narrow bandwidth, much narrower than the absorption peak of the target gas.

In such a known system, the wavelength of the laser diode is scanned across the absorption band of the target gas with a frequency f. In the process of scanning, the intensity of the radiation transmitted also varies with the frequency f. If the atmosphere contains no target gas, the signal from the detector has a frequency that is the same as the scan frequency f. However, if there is target gas in the atmosphere, it will absorb the radiation, thereby attenuating the radiation reaching the detector so that a plot of intensity against time will have an additional frequency component of 2f.

The greater the amplitude of the 2f component, the greater the amount of target gas there is in the measuring path. The 2f component (and higher harmonic components) of the signal can be determined using a phase-sensitive measuring amplifier (lock-in amplifier). A quotient formed from the 2f component and the 1f component can give a measure of the amount of target gas in the measuring path. The 1f and 2f components will be influenced in a similar manner in response to numerous attenuation conditions, for example the length of the measuring path, obscuration of the detecting beam, atmospheric scattering etc., and therefore the 2f:1f quotient is relatively unaffected by attenuation factors other than the amount of target gas in the measuring path.

To obtain the variation in wavelength necessary to scan across the gas absorption band of a target gas, the electrical current through the laser is varied and consequently the optical output power also varies. Due to the nature of laser diodes, the magnitude of the 1f component is necessarily large. The magnitude of the 2f component is a function of the gas absorption and will be small for low levels of toxic gas. The 2f:1f quotients are therefore very small, typically $10^{-4}$ to $10^{-6}$, and the small value of this quotient is a substantial disadvantage of this technique since it is difficult to measure accurately. Furthermore, the electronic assemblies employed to drive the laser and implement the phase sensitive measuring amplifier cause harmonic distortion of the signals and may result in harmonics of the 1f component being generated, including a component at 2f. This additional 2f component will become summed with the 2f component resulting from absorption by the target gas, leading to incorrect measured target gas concentrations.

In GB-2353591, the median value of the scanned wavelength is controlled by a feed-back circuit, as follows. A beam splitter is provided in the laser diode beam and part of the beam is directed along the measuring path and part is directed at an additional detection unit; a cell that holds a sample of the target gas (or some other substance having a suitable known absorption characteristic) is placed in front of the additional detection unit and so absorbs radiation at the wavelength of the target gas. The signal from the additional detector will show whether or not the wavelength of radiation emitted by the diode scans the absorption band of the target gas by determining the 2f:1f quotients for this feed-back beam in the same way as for the detection beam, as discussed above. If the wavelength of the laser diode has drifted, this will be evident from the signal from the detector and allows a correction to be applied to the laser diode to bring it back to the correct wavelength. One disadvantage of such an arrangement, however, is that the beam splitter provides interference fringes that can swamp the signal of the target gas, when it is present at a low concentration in the measuring path, as discussed above.

Another problem with open path gas detectors is the requirement for meticulous optical alignment of the transmitter and receiver units, in view of the distances involved in the measuring path. In an attempt to address this problem, GB-2353591 seeks to provide an optimum alignment between the transmitter unit and the receiver unit at opposite ends of the measuring path, and for this purpose suggests the use of a two-way communication link between the receiver unit and the transmitter unit for controlling the direction of the beam being transmitted towards the receiver unit. The transmitter unit includes steering mirrors for changing the direction of the transmitted beam; the transmitted beam is periodically scanned across an angular range and the optimum direction of the beam is determined as that at which the intensity measured by the receiver unit is greatest. The communication link between the receiver unit and the transmitter unit then provides feedback on the optimum position of the steering mirrors to achieve alignment. The result, however, is a complex system requiring a substantial number of additional components for the control and steering of the mirrors.

Another open path gas detector is described in our co-pending European Patent Application No. 04257895.5. According to this application, a method of aligning a transmitted beam of radiation with a detector in an open path gas detector comprises steering the beam in a predetermined looped pattern around the detector at a frequency f', and detecting, using the detector, the intensity of the radiation after it has traversed the path in order to generate a corresponding detector signal. The position of the detector with respect to the looped beam may be determined from the variation in the intensity represented by the detector signal at a frequency of f' or a harmonic of f' (e.g. 2f', 4f' etc).

Thus, the beam is steered in a path around the detector and the signal from the detector is analysed to find the position of the detector within the path so that the beam can be brought into alignment with the detector. The process may be done iteratively, e.g. by using successively narrower looped paths, until alignment is achieved.

The amplitude of the signal from the detector at a frequency f', or a harmonic of f', where f' is the frequency at which the beam is moved around the predetermined looped pattern, can be used to provide a measure of the angular distance between a central region within the loop and the detector, e.g. the angular distance between the centre of a circular loop and the detector. The beam may be steered in a circular or non-circular, e.g. elliptical, path; when steered in a non-circular pattern, the ratio of the amplitude of the signal at the fundamental frequency f, or a harmonic thereof, e.g. 2f', to the amplitude of the signal at a different harmonic, e.g. 4f', can provide a measure of the distance between a central region within the loop and the detector. The phase of the variation in the intensity of the signal from the detector at the frequency f, or a harmonic of f, can provide a measure of the direction of the detector with respect to a central region within the loop, e.g. the centre of a circular loop.

The systems described in GB-2353591 and our co-pending application are complex and both require a significant number of additional elements for aligning the transmitter and receiver units, all of which may affect the cost of manufacture and maintenance, and the reliability, of the instrument.

There remains, therefore, a need for a low cost open path gas detector for measuring target gas levels efficiently and reliably.

WO 2004/025324 discloses a differential absorption laser radar for the measurement of gaseous species, in which a transmit portion directs a main light beam to a remote target and also provides a local oscillator beam. A receive portion receives light returned from the remote target and coherently mixes the received light with the local oscillator beam. Additionally, signal correction means extract a portion of the main light beam and direct such extracted light back into the receive portion after having introduced a frequency difference in relation to the local oscillator beam. This provides a normalisation signal and improved immunity to drift and interference. US-5345306 concerns apparatus for measuring spectral absorption in an opaque specimen, in which light of a specific frequency from a laser is split into two beams, one of which is transmitted by way of the specimen to a detector and the other of which is transmitted towards the detector by way of a frequency shifter. The two beams are combined at the detector, and a beat signal is produced in respect of light transmitted by the specimen whereas none occurs in respect of light scattered by the specimen.

DE-A-4201922 discloses a means for measuring absorption of light, by an aerosol for example, in which a beam of electromagnetic radiation is passed through a beam splitter to create first and second coherent measurement beams, both of which are transmitted through a measurement zone. After the measurement zone, the two beams are passed through a Fresnel prism to create at an evaluation device an overlap in the two beams. An interference pattern is thereby produced, which is measured for determining characteristics of the aerosol.

Disclosure of the Invention

The present invention seeks to overcome the above problems and to provide a gas detection system which can be produced at a low cost and which can operate efficiently and reliably.

The present invention also seeks, at least in a preferred form described below, to provide a gas detection system, which eliminates the need for a complex beam steering system and other moving parts.

Further, the present invention seeks to provide a gas detection system, which is suitable for application in an open path gas detector for detecting a target gas, for example a toxic gas.

The present invention derives from the fact that superheterodyne techniques, which are commonly used in radio reception for signal isolation and detection, provide substantial performance improvements in terms of selectivity and noise reduction over direct signal detection.

In order to appreciate the present invention, the techniques of heterodyne mixing and superheterodyne reception as employed in radio communications will first be described briefly. Heterodyne mixing involves adding (mixing) radio signals in an electronic device, such as an amplifier stage, having a non-linear response in order to form sum/difference frequencies.

Supposing that two input signals to the electronic device are defined as follows:

$$S_1 = \sin(\omega_1 t)\ldots\ldots\ldots\ldots\ldots\ldots\ldots\ldots\ldots\ldots\ldots\ldots\ldots\ldots\ldots\ldots\ldots\ldots 1$$

$$S_2 = \sin(\omega_2 t)\ldots\ldots\ldots\ldots\ldots\ldots\ldots\ldots\ldots\ldots\ldots\ldots\ldots\ldots\ldots\ldots\ldots\ldots 2$$

Where:

$S_1$ and $S_2$ represent the input signals
$\omega_1$ and $\omega_2$ represent the signal frequency
t represents time

then the mixing that takes place in the electronic device may be represented by the non-linear transfer function:

$$R = a.D + b.D^2 + c.D^3 \text{ etc}\ldots\ldots\ldots\ldots\ldots\ldots\ldots\ldots\ldots\ldots\ldots\ldots\ldots\ldots\ldots\ldots 3$$

Where:

R is the response of the process
D is the input or drive signal
a, b & c are constants

Constants higher than the cubic may also exist. However, for the present purposes, only the squared term will be considered in the following analysis.

Therefore, an output signal S from the electronic device may be represented by:

$$S = a.(S_1 + S_2) + b.(S_1+S_2)^2 \dots\dots\dots\dots\dots\dots\dots\dots\dots\dots\dots\dots\dots\dots\dots\dots\dots\dots\dots\dots\dots 4$$

Ignoring the linear variables and expanding the squared term yields:

$$S = b.(\sin(\omega_1 t) + \sin(\omega_2 t)) . (\sin(\omega_1 t) + \sin(\omega_2 t))$$
$$= b.(\sin^2(\omega_1 t)+\sin^2(\omega_2 t) + 2\sin(\omega_1 t). \sin(\omega_2 t))\dots\dots\dots\dots\dots\dots\dots\dots\dots\dots 5$$

The standard trigonometric relation:

$$2.\sin(A).\sin(B) = \cos(A-B) - \cos(A+B)\dots\dots\dots\dots\dots\dots\dots\dots\dots\dots\dots\dots\dots 6$$

may be applied to equation 5 to yield the following equation:

$$S = b.(\cos(2\omega_1 t-\Pi)/2 + \cos(2\omega_2 t-\Pi)/2 + 1 + \cos((\omega_1-\omega_2).t)) - \cos((\omega_1+\omega_2).t)\dots\dots\dots\dots\dots\dots\dots\dots\dots\dots\dots\dots\dots\dots\dots\dots\dots 7$$

Equation 7 demonstrates that the output signal S will include frequencies at twice the frequency values $\omega_1$ and $\omega_2$, as well as sum frequencies $\omega_1 + \omega_2$ and difference frequencies $\omega_1 - \omega_2$. In superheterodyne detection, the difference frequency $\omega_1 - \omega_2$ is employed and effectively generates a beat frequency at a lower value than that of either the original signals.

In practical applications of the superheterodyne reception, the first input signal $S_1$ is the radio carrier signal, and the frequency $\omega_2$ of the second input signal $S_2$ is normally varied in order to achieve tuning and ensure that the difference frequency $\omega_1 - \omega_2$ remains constant. As a result, subsequent filtering and amplification stages in the radio receiver can be designed around a known frequency, and this greatly simplifies the circuit design and enhances performance. In addition, the use of the difference frequency $\omega_1 - \omega_2$ means that such filtering and amplification stages can operate at a significantly reduced frequency by comparison with the relatively high frequency $\omega_1$ of the radio carrier signal.

A similar calculation can be applied to the transmission of two light beams through a transparent medium. Within the transparent medium, the light beams propagate by virtue of local polarization of the molecules (where polarization refers to delocalization of the outer electron wave function about an atom or molecule within the medium). Such polarization is proportional to the strength of the electric field component of the optical signal and may be represented:

$$P = k.E\dots\dots\dots\dots\dots\dots\dots\dots\dots\dots\dots\dots\dots\dots\dots\dots\dots\dots\dots\dots\dots\dots\dots\dots\dots\dots\dots\dots 8$$

Where:

P is the polarization
E is the electric field strength
k is a constant

However, for some materials the polarization is not linearly related to the electric field but may be represented:

$$P = k.E + k^2E^2 \text{ etc}\ldots\ldots\ldots\ldots\ldots\ldots\ldots\ldots\ldots\ldots\ldots\ldots\ldots\ldots\ldots\ldots\ldots\ldots 9$$

In this situation, sum and difference signals are generated when the light beam passes through the medium in much the same way as described above.

According to the present invention, such sum and/or difference signals may be employed in a gas detection system and method in order to monitor the presence of a target gas and measure the levels of gas present.

In accordance with a first aspect of the present invention, there is provided a gas detection system for detecting a target gas, comprising: a transmitter unit including a source of coherent radiation and capable of directing a primary beam of the coherent radiation at a wavelength absorbed by the target gas along a primary optical path across a target gas monitoring space towards a receiver unit; a beam splitter for splitting the primary beam to generate a secondary beam of the coherent radiation; the receiver unit receiving the primary and the secondary beams of coherent radiation and having a measuring detector for providing a measurement output; and an optical element provided before the recever unit for directing the primary and the secondary beams of radiation at the measuring detector, wherein the measuring detector comprises a detector surface on which the beams are incident with interference, and means for detecting the interference and for providing a measurement output based on said detection; characterised by a scanning device adapted to scan the wavelength of the output of the source of coherent radiation over a gas absoprtion range being detected; and means for directing the secondary beam towards the receiver unit along a further optical path so that the secondary beam is delayed by comparison with the primary beam; and wherein the optical element comprises an optical beam combiner for producing a combined beam in which there is a divergence between the coherent radiation from the primary beam and the coherent radiation from the secondary beam, whereby the wavelength scan and the delay between the optical paths generate at the detector surface a moving pattern of interference fringes; and the detecting means detects the moving pattern of interference fringes for providing said measurement output.

In accordance with a second aspect of the present invention, there is provided a method of gas detection for detecting a target gas, comprising: providing a transmitter unit including a source of coherent radiation; directing a primary beam of the coherent radiation at a wavelength absorbed by the target gas along a primary optical path across a target gas monitoring space towards a receiver unit; splitting the primary beam to generate a secondary beam of the coherent radiation; passing the primary and the secondary beams of radiation through an optical element for directing the beams to the receiver unit; receiving the beams at the receiver unit with intereference; and detecting the interference at a detector surface of a measuring detector to provide a measuring output; and characterised by scanning the wavelength of the output of the source of coherent radiation to scan the primary beam over a gas absorption range being detected; directing the secondary beam towards the receiver unit along a further optical path so that the secondary beam is delayed by comparison with the primary beam; producing a combined beam by means of the optical element, in which there is a divergence between the primary beam and the secondary beam, whereby the wavelength scan and the delay between the optical paths generate at the detector surface a moving pattern of interference fringes; and detecting the moving pattern of interference fringes for providing said measurement output.

The present invention thus makes use of a feature that has hitherto been considered to be problematic and undesirable in gas detectors, namely it specifically creates and detects interference fringes for measurement purposes.

The present invention has a number of significant advantages. In particular, the need for a complex alignment and/or steering system involving moving parts is avoided, and hence manufacturing costs should be significantly reduced. Rather, the interference fringes can be generated and satisfactorily measured without the need for arrangements involving moving parts and feedback circuitry for driving and aligning the optical beam from the transmitter unit.

The secondary beam may be transmitted along the further optical path by means of an optical fibre light guide.

By providing an optical delay, the difference in frequency between the primary beam and the secondary beam when combined may be precisely controlled.

Further control of the combined beam may be achieved by the provision of a control arrangement for adjusting the overlap of the primary beam and the secondary beam at the measuring detector of the receiver unit. Such adjustment may be achieved, for example, by variation of the focus of at least one of the primary beam and the secondary beam at the measuring detector, or by adjusting the position of the measuring detector.

The present invention is described further, by way of example, with reference to the accompanying drawings in which;

Figure 1 is a schematic view of a conventional optical apparatus employed in Young's slit experiment, for the purposes of explanation of the principle of the present invention;

Figure 2 is a diagram of the pattern of illumination resulting from the optical apparatus of Figure 1;

Figure 3 is a schematic view of a first embodiment of apparatus according to the present invention;

Figure 4 is a schematic view of a second embodiment of apparatus according to the present invention; and

Figure 5 is a detail of the apparatus of Figure 4.

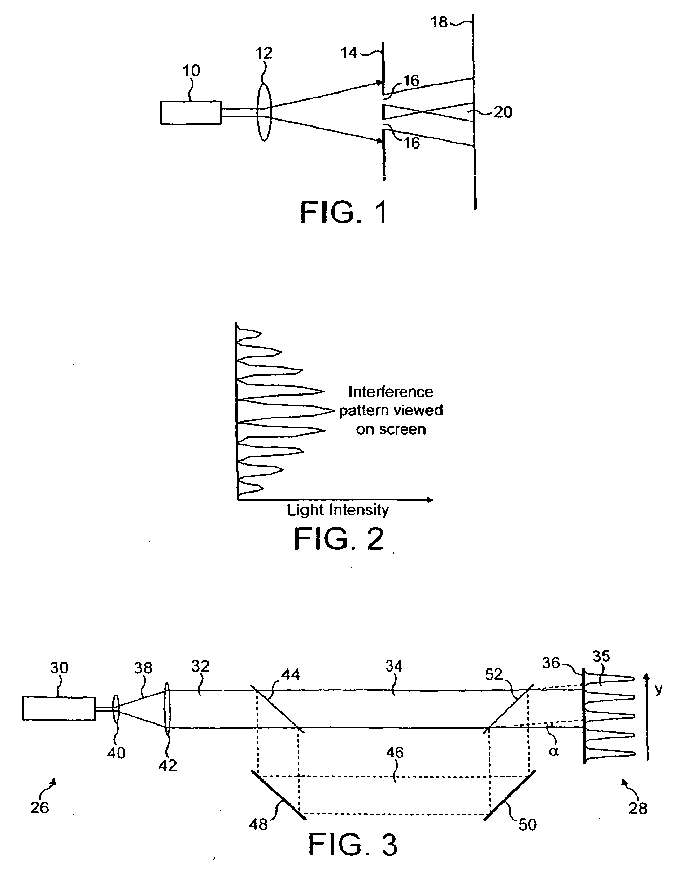

In order to appreciate how techniques similar to superheterodyne reception may be employed in a gas detection system, Young's slit experiment will first be described with reference to Figures 1 and 2. As shown in Figure 1, a coherent source of light, such as a laser 10, is arranged to transmit a beam of light through a diverging lens 12 towards a partition 14 having two slits 16 disposed within the circumference of the divergent beam. Light passing through the two slits 16 creates two paths of illumination directed at a screen 18. In the area 20 where the two paths of illumination overlap on the screen 18, a pattern of illumination having peaks and troughs of intensity is created, as shown in Figure 2. These peaks and troughs of intensity, known as interference fringes, are produced when multiple paths of illumination derived from a coherent source of light overlap.

The arrangement of Figure 1 may be adapted according to the invention to provide the apparatus shown in Figure 3. Figure 3 is a representation of an open path gas detector according to the invention having a transmitter unit 26 and a receiver unit 28. The transmitter unit 26 includes a coherent source of light in the form of a laser 30, which transmits a coherent detection beam 32 across a target gas monitoring space 34 to the receiver unit 28. The detection beam 32 emitted by the laser 30 is passed through a beam expander 38 comprising a pair of lenses 40, 42 and into the monitoring space 34. The receiver unit 28 on the far side of the monitoring space 34 includes a measuring detector 35 having a detection screen 36, and the detection screen 36 is disposed generally perpendicular to the detection beam 32.

A first beam splitter 44 is arranged in the path of the detection beam 32, between the beam expander 38 and the monitoring space 34, in order to split the detection beam to generate a secondary beam 46 of coherent light, which is reflected along a further optical path towards the detection screen 36 of the receiver unit 28 by way of a pair of mirrors 48, 50 and a further beam splitter 52. The beam splitter 52 is disposed in the optical path of the detection beam 32 so that the detection beam and the secondary beam are recombined prior to illuminating the detection screen 36. In the instance illustrated, the detection beam 32 and the secondary beam 46 are not precisely aligned on recombination but diverge at an angle $\alpha$, for reasons which are discussed below.

In this instance, the illumination on the detection screen 36 is given by:

$$E_y = E_g\sin(\omega t) + E_s\sin(\omega t + 2\Pi.y.\sin(\alpha)/\lambda)\dots\dots\dots\dots\dots\dots\dots\dots\dots\dots\dots\dots\dots 10$$

Where:

$E_y$ is the electric field vector for the illumination on the detection screen 36 at a position offset by a distance y from a base point on the screen,

$E_g$ is the electric field vector for the direct radiation of the detection beam 32 at the detection screen 36,

$E_s$ is the electric field vector for the indirect radiation of the secondary beam 46 on the detection screen 36,

$\alpha$ is the angle of the secondary beam 46 relative to the detection beam 32 on recombination,

$\omega$ is the frequency of the coherent light from the laser 30,

$\lambda$ is the wavelength of the coherent light from the laser 30.

The intensity of the illumination at position y of the detection screen 36 is given by $E_y^2$. From Equation 10, it is evident that the equation for $E_y^2$ will include sum and difference frequency terms representing alternate bands of bright and dark illumination in the direction y on the detecting screen 36, ie interference fringes. The bright and dark regions are separated by a distance $y_f$:

$$y_f = \lambda/\sin(\alpha)\dots\dots\dots\dots\dots\dots\dots\dots\dots\dots\dots\dots\dots\dots\dots\dots\dots\dots\dots\dots\dots\dots\dots\dots\dots\dots\dots\dots\dots 11$$

By way of example, if a wavelength of 1600 nanometers typically employed in an open path gas detector is assumed, then the spacing between the interference fringes for varying angles $\alpha$ is given in Table 1 below:

**Fringe Spacing for Beams Combined at an Angle**

| Angle, deg | Spacing, mm |
|---|---|
| 0.1 | 0.46 |
| 0.2 | 0.23 |
| 0.3 | 0.15 |
| 0.4 | 0.11 |
| 0.5 | 0.09 |
| 0.6 | 0.08 |
| 0.7 | 0.07 |
| 0.8 | 0.06 |
| 0.9 | 0.05 |
| 1 | 0.05 |

From Table 1, it is evident that interference fringes of substantial spacing capable of being detected by a relatively small detector of, for example, 0.3 mm diameter can be generated if the angle $\alpha$, at which the detection beam and the secondary beam are recombined, is kept relatively small, for example less than or equal to 0.2 degrees.

The example just given assumes that the wavelength of light emitted by the laser 30 is constant and therefore that the fringe pattern on the detector screen 36 is static. In practice, however, it is usual in an open path gas detector for the wavelength of the laser light emitted from the transmitter unit 26 to be varied with time in order to scan the absorption band of interest for the target gas. Since the secondary beam 46 travels by a more indirect path to the detection screen 36 than the detection beam 32, this means that at the time of striking the detection screen 36 the secondary beam is delayed by comparison with the detection beam 32. As a result, the secondary beam 46 will be at a slightly different wavelength (and hence frequency) by comparison with the detection beam 32. This modifies equation 10 as follows:

$$E_y = E_g\sin(\omega_1 t) + E_s\sin(\omega_2 t + 2\Pi.y.\sin(a)/\lambda)\dots\dots\dots\dots\dots\dots\dots\dots\dots\dots\dots\dots\dots\dots 12$$

Where:

$\omega_1$ and $\omega_2$ are the frequencies respectively of the detection beam and the secondary beam.

In this situation, a fringe pattern is still generated on the detection screen 36. However, the pattern of alternate bright and dark bands will move in the direction y as a function of time as the relative phase of the detection and secondary beams vary with time. At any fixed location y, the effective speed of this movement is given by $\omega_1 - \omega_2$.

Such a situation can be regarded as similar to the superheterodyne concept described above. However, it is important to realise that the process does not actually generate a real, independent, sum/difference frequency as in superheterodyne reception. In superheterodyne reception of radio signals, or indeed optical signals, such as in the wavelength doubling or mixing processes often used with high powered lasers, sum and/or difference frequencies are actually generated as real measurable radiation fields.

For example, when mixing the output of a neodymium yttrium aluminium garnet (NdYAG) laser, the mixing process is performed in a suitable optical crystal that has the required non-linear polarisation properties. A light beam of an invisible infrared (IR) wavelength of 1064nm from the laser is converted to light of a very visible green wavelength of 532nm within the crystal. The green light is normally clearly visible because of slight scattering by imperfections within the crystal or by dust etc. on the surface of the crystal. Further, the green light beam is also visible (for high power lasers) within the air beyond the crystal because of dust particles that similarly scatter some of the radiation. Thus, into the crystal is directed the invisible IR output of the laser, and out of the crystal emerges a combined beam containing not only the residual IR light but also the clearly visible radiation of double the wavelength. This visible beam can be separated from the residual IR radiation by using a suitable wavelength dependent filter for example; it is a real beam of electromagnetic radiation entirely separate from, and independent of, the original IR radiation.

In the present process, however, there is no non-linear mixing stage. Rather, the two incident beams both impinge on a detector that is sensitive to the radiation in each beam but not specifically to the sum/difference frequencies. If this detector were not present then there would be no sum or difference radiation generated. Further, it would be of no use simply to substitute a detector that is only sensitive to the sum or difference frequency since it would not then detect any signal.

Specifically, for the present application, radiation of around 1600nm wavelength (so about $2 \times 10^{14}$ Hz frequency) is employed. This is readily detected by the use of indium gallium arsenide (InGaAs) detectors that typically have a peak response around 1500nm, although some response is also retained for lower wavelengths. The difference frequency that is generated will, however, generally be much smaller than $10^{14}$ Hz, typically being of the order a few megahertz. Such a frequency has wavelength of the order of tens of metres and as such would not be detected by an InGaAs detector. Indeed, a suitable detector would be a length of wire (an aerial). However, if a simple length of wire were placed in the region where the two beams overlap then there would not be any difference frequency detected because the actual radiation at MHz frequency is simply not present. The point here is that the detector must be able to detect the optical signal ($2 \times 10^{14}$ Hz) and the difference frequency (MHz) only occurs by virtue of the fringe pattern or beats that occur between the two optical signals.

The detector 35 at the detector screen 36 thus detects the moving fringe pattern, in which the rate of movement is $\omega_1 - \omega_2$. By ensuring that the angle of combination of the detection beam 32 and the secondary beam 46 is small, the fringe spacing will be sufficiently large to be detected by a relatively small detector.

It has been found that the detection of interference fringes offers a number of advantages by comparison with the direct measurement of the detection beam 32 alone. In particular, it has been established that the measurement signal output by the detector 35 is less susceptible to atmospheric factors that attenuate the detection beam 32 than in the case of direct measurement of this beam. Consequently, the effect of noise generated within the detector 35 or the subsequent electronic amplification stages becomes less of a problem.

The reason for this improvement is as follows. If $E_g$ is taken as the electric field vector for the detection beam which is transmitted directly from the laser 30 through the monitoring space 34 to the detection screen 36 and which is subjected to potential gas absorption, and $E_s$ as the electric field vector for the secondary or indirect beam transmitted from the laser 30 to the detection screen 36, the electric field vector $E_g$ will be significantly less than the electric field vector $E_s$ because of the attenuation due to the gas absorption. The magnitude of the combined electric vector as measured at a bright band (or peak) of the interference fringe pattern is given by $E_s + E_g$, while the magnitude at a dark band (or trough) is given by $E_s - E_g$. The intensity of the light as measured by detector 35 at the detection screen 36 can be estimated as follows:

$$P_{max} = ((E_s + E_g)/k)^2 \dots\dots\dots\dots\dots\dots\dots\dots\dots\dots\dots\dots\dots\dots\dots\dots\dots\dots\dots 13$$

$$P_{min} = ((E_s - E_g)/k)^2 \dots\dots\dots\dots\dots\dots\dots\dots\dots\dots\dots\dots\dots\dots\dots\dots\dots\dots\dots 14$$

Where:

    $P_{max}$ is the light intensity of a bright band,
    $P_{min}$ is the light intensity of a dark band,
    k is a constant.

Thus the fringe intensity range may be expressed as:

$$P_{max} - P_{min} = 4.\sqrt{(P_s.P_g)} \dots\dots\dots\dots\dots\dots\dots\dots\dots\dots\dots\dots\dots\dots\dots\dots\dots 15$$

In the event that a reference is also employed, by further measuring $P_s$ by means of a separate detector and generating a normalized fringe signal from which systematic variations associated with the laser 30 and its optics are removed, the measurement signal becomes:

$$S = 4.\sqrt{(P_g/P_s)} \dots\dots\dots\dots\dots\dots\dots\dots\dots\dots\dots\dots\dots\dots\dots\dots 16$$

The presence of the square root term in the measurement signal in both equations 15 and 16 according to the present invention has a dramatic effect on this signal by comparison with a direct measurement of the detection beam according to the prior art, because it means that the measurement signal decays much less rapidly in response to increasing atmospheric attenuation than would a measurement signal obtained from the direct detection beam alone. As a result, problems generated by atmospheric attenuation and by noise levels in the detector or processing circuitry are significantly reduced.

A further minor modification needs to be introduced, since the ability to detect a gas is based on the variation of $P_g$ rather than on $P_g$ itself. As $P_g$ changes by $\delta P_g$, so the fringe intensity range changes as follows:

$$F_2 \approx F_1.(1+0.5\delta P_g/P_g) \dots\dots\dots\dots\dots\dots\dots\dots\dots\dots\dots\dots\dots\dots\dots 17$$

Where:

$F_1$ is the fringe intensity range prior to the change $\delta P_g$
$F_2$ is the fringe intensity range after the change $\delta P_g$.

It may be assumed that $\delta P_g \ll P_g$.

Equation 17 indicates that the perceived variation is reduced by a factor of 2, but this is a very small penalty to pay compared with the substantial advantage offered by the presence of the square root term.

The above advantages can be illustrated with a specific example. In this example, it is assumed that the detector 35 is an indium gallium arsenide (InGaAs) device, which offers a good noise performance and has a typical Noise Equivalent Power (NEP) of the order of $2\times10^{-11}$ for a typical signal bandwidth of 1MHz. It is also assumed that the measurement path is 50 metres, and the laser beam has a divergence of one degree. The laser power output is typically 0.5 mw for a vertical cavity surface emitting laser (VCSEL), and may be increased by a factor of 10 if a distributed feedback laser (DFB) is used instead.

Typical values for the direct detection beam for this example are given in Table 2 below:

**Collection Efficiency and Detector Noise for Foggy Condition**

| Laser Power | 0.5mW |
|---|---|
| Optical Efficiency | 0.2 |
| Geometrical Efficiency | 0.002 |
| Atmospheric Transmission | 0.001 |
| Collected Power | $2\times10^{-10}$ Watt |

The optical efficiency represents a realistic estimate of the total power transmitted through all the various optical elements of both the transmitter unit and the receiver unit based on the detection beam, although the actual efficiency may be marginally greater than this. The geometric efficiency relates to the requirement to expand the laser beam to a reasonable divergence in order to provide tolerance to pointing errors and vibration. The factor given in Table 2 assumes a beam divergence of 1 degree in the detection beam, in order to compensate for possible pointing errors in the transmitter unit, and collecting optics of 3cm diameter. Finally, the atmospheric transmission is the anticipated "worst case" that must be tolerated by the instrument. The collected power for the detection beam for these values is about 10 times the detector NEP level.

Continuing with this example, the power level for the indirect secondary beam may be assumed to be of the order of 0.05mW, which will produce a basic signal on the detector screen 36 that is about $2.5\times10^6$ times the detector noise floor. Based on these values, and the power difference between the bright and dark bands of the interference fringe pattern obtained from equation 15 gives:

$$P_{max} - P_{min} = 4.\sqrt{(P_g.P_s)}$$
$$= 4.\sqrt{(2 \times 10^{-10} \times 5 \times 10^{-5})}$$
$$= 4 \times 10^{-7} \dots\dots\dots\dots\dots\dots\dots\dots\dots\dots\dots\dots\dots\dots\dots\dots\dots\dots\dots\dots 18$$

The output signal from the detector will have a signal to noise (S/N) ratio given by $(P_{max} - P_{min})$/NEP. It will be seen that this is 20,000, which is 2,000 times greater than for the direct detection beam alone.

In practice, the actual noise level that may be achieved depends on the averaging time over which the detector signals are sampled and on the laser scanning rate. In addition, it is not the detector noise level that limits the performance of the detection system but rather the noise generated by the first stage of signal amplification performed on the output signal from the detector 35. Typically, such amplification is performed by a transimpedance amplifier, which may yield a reduction in performance due to noise of the order of 20 times. Allowing for such reduction would reduce the S/N ratio to 1,000. Taking averaging into account as well yields a final S/N ratio of the order of 550,000, which is clearly more than adequate to achieve a final S/N ratio of 100,000 that is considered to be acceptable.

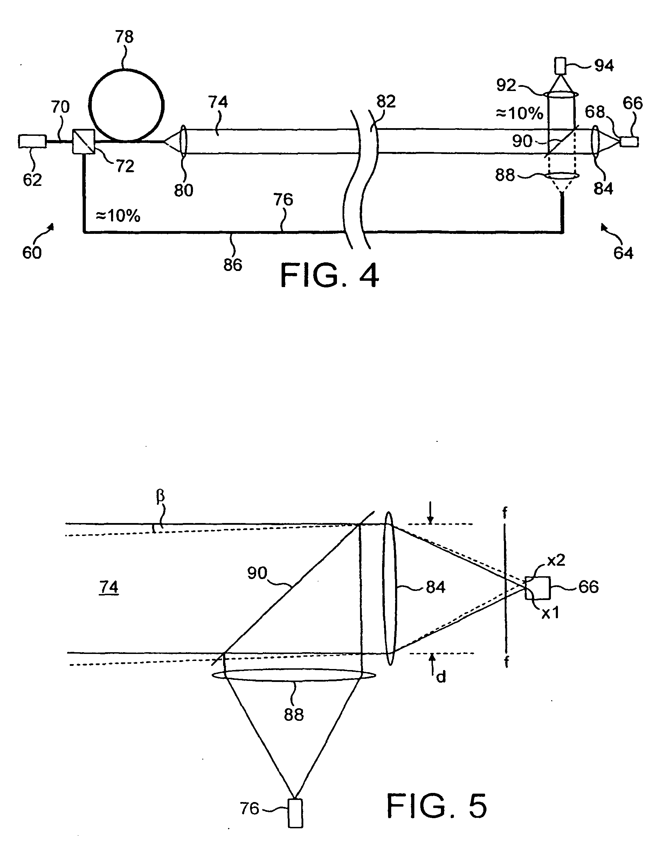

Turning now to Figures 4 and 5, a second embodiment of the present invention will be described. This embodiment operates on the same principle as that illustrated in Figure 3. As in the case of the Figure 3 embodiment, the second embodiment of the invention includes a transmitter unit 60 including a laser 62, and a receiver unit 64 including a measurement detector 66 having a detection screen 68.

The output from the laser 62 is supplied into an optical fibre guide 70 and thence to a beam splitter 72 where the light beam is split into a detection beam 74 and a secondary beam 76. The detection beam 74 is transmitted by way of an optical delay provided by a further optical fibre guide 78 to a beam expander 80 and thence across the area 82 to be monitored to a condenser 84 for focussing the detection beam on the detection screen 68 of the measurement detector 66.

Meanwhile, the secondary beam 76 is transmitted by way of a further fibre optical guide 86 to a beam expander 88 which directs the secondary beam 76 at a beam splitter 90 for directing a substantial proportion, amounting to approximately 90% of the secondary beam 76, to the condenser 84 and thence onto the detection screen 68. The remaining proportion of approximately 10% of the secondary beam 76 is transmitted through the beam splitter 90 to another condenser 92 and a reference detector 94 for use as a normalizing reference for compensating for systematic variations in the output of the laser 62.

As described previously, the detection beam 74, some of which is absorbed by traces of gas in the monitoring area 82, and the secondary beam 76 are combined downstream of the beam splitter 90 and generate interference fringes on the detection screen 68 of the measurement detector 66. This combined signal is detected by means of the measurement detector 66 to provide a measurement signal as output as described above.

As explained above, the laser output is scanned across the absorption band of the target gas being monitored, and the difference in path length between that of the detection beam 74 and that of the secondary beam 76 would normally introduce a time delay into the secondary beam 76 on recombination. By two beams do not overlap on the detection screen 68 and, hence no interference fringes are generated.

A possible way of remedying this situation is to move the measurement detector 66 towards the converging lens 84, for example, to the plane f-f'. The detection beam 74 and the secondary beam 76 will again overlap, although the relative spacing of the interference fringes will be reduced. In other words, the number of fringes on the detection screen 68 will be increased. It follows that the fringe intensity range separating the bright and dark bands of the fringe pattern will also be reduced and the detection sensitivity will need to be increased.

An alternative approach to resolving this problem is to introduce a focussing arrangement into one or both of the detection beam 74 and the secondary beam 76, in order to ensure that whilst one beam is brought to a precise focus at the detection screen 68 of the measurement detector 66 the other beam is brought to an imperfect focus so as to fill the whole area of the detector screen 68. For example, this might be achieved by an arrangement permitting movement of the end of the optical guide 86 and/or movement of the beam expander 88.

It will be apparent that various possible modifications may be introduced in the described embodiments of the invention.

In particular, alternative means for recombining the primary detection beam and the secondary beam for generating the interference fringes for detection may be envisaged. adjusting the optical delay 78, this delay can be controlled and can be selected to be any chosen value.

As has also been explained previously, it is important that the detection beam 74 and the secondary beam 76 are sufficiently aligned on recombination to ensure that a fringe pattern having a large fringe spacing is generated by comparison with the size of the detection screen 68. Table 1 above demonstrates that the relative angle of the two beams on recombination should preferably be of the order 0.1 degrees. This angle is relatively unaffected by pointing errors or vibrations at the transmitter unit 60, providing that the extent of such variations is less than the angle of the laser beam divergence (ie less than + or - 0.5 degrees in the example given).

Nevertheless, pointing errors or vibrations at the receiver unit 64 will have an impact on the overlap of the detection beam 74 and the detector beam 76 at the detection screen 68. More particularly, referring to Figure 5, the beam splitter 90 and the converging lens 84 are fixed relative to one another in the receiver unit 64, and the light from the secondary beam 76 reflected by the beam splitter 90 and directed through the converging lens 84 is focussed on the detector screen 68 at the point x1. In the event that the receiver unit 64 is aligned relative to the transmitter unit 60, the detection beam 74 will be received within the receiver unit 64 along the path indicated by solid lines and will coincide with the secondary beam 76 on recombination and be focussed on the detector screen 68 at the same point x1. However, in the event that the receiver unit 64 is marginally misaligned relative to the transmitter unit 60 by an angle β as shown in Figure 5, then the detection beam 74 will appear to be travelling in the direction indicated by the dashed lines and will be focussed on the detection screen 68 at a point x2. It can be seen that in this instance the light paths of the

For example, the provision of the reference detector 94 for deriving a reference signal from the secondary beam 76 may be omitted altogether. Alternatively, the reference signal may be taken from the secondary beam 76 at a different location, for example upstream of the beam splitter 90 rather than downstream as illustrated.

The described method and apparatus provide a sensitive means for detecting gas using an open path gas detector and offer substantial advantages in terms of tolerance to foggy conditions and opaque atmospheres.

**Claims**

1. A gas detection system for detecting a target gas, comprising:

   a transmitter unit (26, 60) including a source (30; 62) of coherent radiation and capable of directing a primary beam (32, 74) of the coherent radiation at a wavelength absorbed by the target gas along a primary optical path across a target gas monitoring space (34, 82) towards a receiver unit;
   a beam splitter (44, 72) for splitting the primary beam to generate a secondary beam (46, 76) of the coherent radiation;
   the receiver unit being adapted for receiving the primary and the secondary beams of coherent radiation and having a measuring detector (35, 66) for providing a measurement output; and
   an optical element (52, 90) provided before the receiver unit for directing the primary and the secondary beams of radiation at the measuring detector, wherein the measuring detector comprises a detector surface (36, 68) on which the primary and the secondary beams are incident with interference, and means for detecting the interference and for providing a measurement output based on said detection;
   **characterised by**:

   a scanning device adapted to scan the wavelength of the output of the source of coherent radiation over a gas absorption range being detected; and
   means (48, 50; 86) for directing the secondary beam towards the receiver unit along a further optical path so that the secondary beam is delayed by comparison with the primary beam; and wherein:

   the optical element comprises an optical beam combiner (52, 90), which combines the primary and the secondary beams into a combined beam and which produces in the combined beam a divergence between the coherent radiation from the primary beam and the coherent radiation from the secondary beam, whereby the wavelength scan and the delay between the optical paths generate at the detector surface a moving pattern of interference fringes; and
   the detecting means detects the moving pattern of interference fringes for providing the said measurement output.

2. A gas detection system according to claim 1, **characterised in that** the transmitter unit comprises a laser (30, 62).

3. A gas detection system according to claim 1 or 2 **characterised in that** the further optical path is at least partially defined by an optical fibre light guide (86) for transmitting the secondary beam to the optical beam combiner.

4. A gas detection system according to any preceding claim, **characterised in that** an optical delay (78) is included in the primary optical path.

**5.** A gas detection system according to claim 4, **characterised in that** the optical delay comprises a length of optical fibre.

**6.** A gas detection system according to any preceding claim, further **characterised by** a reference detector (94) for detecting a reference signal derived from the secondary beam.

**7.** A gas detection system according to any preceding claim, further **characterised by** a control arrangement for adjusting the overlap of the primary beam and the secondary beam at the measuring detector.

**8.** A gas detection system according to claim 7, **characterised in that** the control arrangement is arranged to adjust one of the focus of at least one of the primary beam and the secondary beam at the measuring detector, the position of an optical element (86, 88) of the further optical path, and the position of the measuring detector.

**9.** A gas detection system according to any preceding claim, **characterised in that** the angle of divergence between the primary beam and the secondary beam is less than or equal to 0.2 degrees.

**10.** A method of gas detection for detecting a target gas, comprising:

   providing a transmitter unit (26, 60) including a source (30; 62) of coherent radiation;
   directing a primary beam of the coherent radiation at a wavelength absorbed by the target gas along a primary optical path across a target gas monitoring space (34, 82) towards a receiver unit (28, 64);
   splitting the primary beam to generate a secondary beam of the coherent radiation;
   passing the primary and the secondary beams of radiation through an optical element for directing the beams to the receiver unit;
   receiving the beams at the receiver unit with interference; and
   detecting the interference at a detector surface of a measuring detector to provide a measuring output;
   and **characterised by**:

   scanning the wavelength of the output of the source of coherent radiation to scan the primary beam over a gas absorption range being detected;
   directing the secondary beam towards the receiver unit along a further optical path so that the secondary beam is delayed by comparison with the primary beam;
   producing by means of the optical element a combined beam in which there is a divergence between the primary beam and the secondary beam, whereby the wavelength scan and the delay between the optical paths generate at the detector surface a moving pattern of interference fringes; and
   detecting the moving pattern of interference fringes for providing said measurement output.

**11.** A gas detection method according to claim 10 further **characterised by** employing an optical fibre light guide (78) for transmitting the secondary beam by way of the further optical path.

**12.** A gas detection method according to claims 10 or 11, further **characterised by** introducing an optical delay into the primary optical path.

**13.** A gas detection method according to any of claims 10 to 12, further **characterised by** detecting a reference signal derived from the secondary beam.

**14.** A gas detection method according to any of claims 10 to 13, further **characterised by** controlling the overlap of the primary beam and the secondary beam at the measuring detector (35, 66) for detecting the interference fringes.

**15.** A gas detection method according to claim 14, **characterised by** controlling the overlap by one of adjusting the focus of at least one of the primary beam and the secondary beam, adjusting the position of an optical element (86, 88) of the further optical path, and adjusting the position of the measuring detector.

**16.** A gas detection method according to any of claim 10 to 15, **characterised by** controlling the angle of divergence between the primary beam and the secondary beam to be less than or equal to 0.2 degrees.

**Patentansprüche**

1. Gasdetektionssystem zur Detektion eines Zielgases mit:

   einer Sendeeinheit (26, 60), die eine Quelle (30, 62) für kohärente Strahlung enthält und in der Lage ist, einen Primärstrahl (32, 74) der kohärenten Strahlung mit einer Wellenlänge, die durch das Zielgas absorbiert wird, entlang eines primären Strahlengangs durch einen Zielgas-Überwachungsraum (34, 82) in Richtung auf eine Empfangseinheit zu lenken;
   einem Strahlteiler (44, 72) zur Teilung des Primärstrahls für die Erzeugung eines Sekundärstrahls (46, 76) der kohärenten Strahlung;
   wobei die Empfangseinheit für den Empfang des Primär- und Sekundärstrahls der kohärenten Strahlung ausgelegt ist und einen Messdetektor (35, 66) zum Vorsehen einer Messwertausgabe aufweist; und
   einem optischen Element (52, 90), das vor der Empfangseinheit zum Lenken des primären und sekundären Strahlungsbündels auf den Messdetektor vorgesehen ist, wobei der Messdetektor eine Detektorfläche (36, 68), auf der der primäre und sekundäre Strahl mit Interferenz einfällt, und Mittel zum Detektieren der Interferenz und zum Vorsehen einer Messwertausgabe auf Basis der Detektion aufweist;
   **gekennzeichnet durch**:

   eine Abtastvorrichtung, die zum Abtasten der Wellenlänge von dem Ausgang der Quelle der kohärenten Strahlung über einen Gasabsorptionsbereich, der detektiert wird, ausgelegt ist; und
   Mittel (48, 50; 86) zum Richten des Sekundärstrahls entlang eines weiteren Strahlengangs in Richtung auf die Empfängereinheit derart, dass der Sekundärstrahl im Vergleich zum Primärstrahl verschoben ist; und wobei:

   das optische Element einen optischen Strahlvereiniger (52, 90) aufweist, der den Primärstrahl und den Sekundärstrahl zu einem kombinierten Strahl vereinigt und der in dem kombinierten Strahl eine Divergenz zwischen der kohärenten Strahlung von dem Primärstrahl und der kohärenten Strahlung von dem Sekundärstrahl generiert, wobei die Wellenlängenabtastung und die Verschiebung zwischen den Strahlengängen an der Detektoroberfläche ein bewegtes Muster von Interferenzstreifen erzeugt; und
   das Detektionsmittel das bewegliche Muster der Interferenzstreifen zum Vorsehen der Messwertausgabe detektiert.

2. Gasdetektionssystem nach Anspruch 1, **dadurch gekennzeichnet, dass** die Sendeeinheit einen Laser (30, 62) aufweist.

3. Gasdetektionssystem nach Anspruch 1 oder 2, **dadurch gekennzeichnet, dass** der weitere Strahlengang mindestens teilweise durch ein Lichtleitfaserkabel (86) zur Übertragung des Sekundärstrahls zum optischen Strahlvereiniger festgelegt ist.

4. Gasdetektionssystem nach einem der vorangehenden Ansprüche, **dadurch gekennzeichnet, dass** eine optische Verschiebung (78) in dem primären Strahlengang enthalten ist.

5. Gasdetektionssystem nach Anspruch 4, **dadurch gekennzeichnet, dass** die optische Verschiebung eine Länge der optischen Faser umfasst.

6. Gasdetektionssystem nach einem der vorangehenden Ansprüche, ferner **gekennzeichnet durch** einen Referenzdetektor (94) zur Detektion eines Referenzsignals, das vom Sekundärstrahl abgeleitet ist.

7. Gasdetektionssystem nach einem der vorangehenden Ansprüche, ferner **gekennzeichnet durch** eine Steuer-/Regel-Anordnung zum Einstellen der Überlappung von Primärstrahl und Sekundärstrahl am Messdetektor.

8. Gasdetektionssystem nach Anspruch 7, **dadurch gekennzeichnet, dass** die Steuer-/Regel-Anordnung eingerichtet ist zur Einstellung eines der Parameter: Fokus von mindestens einem von dem Primärstrahl und dem Sekundärstrahl am Messdetektor, Position von einem optischen Element (86, 88) des weiteren Strahlengangs, und Position des Messdetektors.

9. Gasdetektionssystem nach einem der vorangehenden Ansprüche, **dadurch gekennzeichnet, dass** der Ablenkungswinkel zwischen dem Primärstrahl und dem Sekundärstrahl kleiner oder gleich 0,2 Grad ist.

**10.** Verfahren zur Gasdetektion, für das Detektieren eines Zielgases, umfassend:

Vorsehen einer Sendeeinheit (26, 60), die eine Quelle (30, 62) für kohärente Strahlung enthält;

Lenken eines Primärstrahls der kohärenten Strahlung mit einer Wellenlänge, die durch das Zielgas absorbiert wird, entlang eines primären Strahlengangs durch einen Zielgas-Überwachungsraum (34, 82) in Richtung auf eine Empfängereinheit (28, 64);

Teilen des Primärstrahls zur Erzeugung eines Sekundärstrahls der kohärenten Strahlung;

Hindurchführen des primären und der sekundären Strahlenbündels durch ein optisches Element für das Lenken der Strahlen zur Empfängereinheit;

Empfangen der Strahlen mit Interferenz an der Empfängereinheit; und

Detektieren der Interferenz an der Detektorfläche eines Messdetektors zum Vorsehen einer Messwertausgabe; und **gekennzeichnet durch**:

Abtasten der Wellenlänge von dem Ausgang der Quelle der kohärenten Strahlung zum Abtasten des Primärstrahls über einen Gasabsorptionsbereich, der detektiert wird;

Richten des Sekundärstrahls entlang eines weiteren Strahlengangs in Richtung auf die Empfängereinheit derart, dass der Sekundärstrahl im Vergleich zum Primärstrahl verschoben ist;

Erzeugen eines kombinierten Strahls mittels des optischen Elements, in dem eine Divergenz zwischen dem Primärstrahl und dem Sekundärstrahl vorliegt, wobei die Wellenlängenabtastung und die Verschiebung zwischen den Strahlengängen an der Detektorfläche ein bewegtes Muster von Interferenzstreifen erzeugt; und

Detektieren des bewegten Musters der Interferenzstreifen zum Vorsehen der Messwertausgabe.

**11.** Gasdetektionsverfahren nach Anspruch 10, ferner **gekennzeichnet durch** den Einsatz eines Lichtleitfaserkabels (78) zum Senden des Sekundärstrahls über den weiteren Strahlengang.

**12.** Gasdetektionsverfahren nach Anspruch 10 oder 11, ferner **gekennzeichnet durch** das Einführen einer optischen Verschiebung in den primären Strahlengang.

**13.** Gasdetektionsverfahren nach einem der Ansprüche 10 bis 12, ferner **gekennzeichnet durch** das Detektieren eines Referenzsignals, das aus dem Sekundärstrahl abgeleitet ist.

**14.** Gasdetektionsverfahren nach einem der Ansprüche 10 bis 13, ferner **gekennzeichnet durch** das Steuern/Regeln der Überlappung von Primärstrahl und Sekundärstrahl am Messdetektor (35, 66) zum Detektieren der Interferenzstreifen.

**15.** Gasdetektionsverfahren nach Anspruch 14, **gekennzeichnet durch** das Steuern/Regeln der Überlappung **durch** das Einstellen des Fokus von mindestens einem von Primärstrahl und Sekundärstrahl, das Einstellen der Position eines optischen Elements (86, 88) des weiteren Strahlengangs, oder das Einstellen der Position des Messdetektors.

**16.** Gasdetektionsverfahren nach einem der Ansprüche 10 bis 15, **gekennzeichnet durch** das Steuern/Regeln des Divergenzwinkels zwischen dem Primärstrahl und dem Sekundärstrahl auf einen Wert, der kleiner oder gleich 0,2 Grad ist.

**Revendications**

**1.** Système de détection de gaz pour détecter un gaz cible, comprenant :

une unité émettrice (26, 60) comprenant une source (30 ; 62) de rayonnement cohérent et capable de diriger un faisceau primaire (32, 74) du rayonnement cohérent à une longueur d'onde absorbée par le gaz cible le long d'un chemin optique primaire à travers un espace de détection de gaz cible (34, 82) en direction d'une unité réceptrice ;

un séparateur de faisceau (44, 72) pour séparer le faisceau primaire de manière à générer un faisceau secondaire (46, 76) du rayonnement cohérent ;

l'unité réceptrice étant adaptée pour recevoir le faisceau primaire et le faisceau secondaire de rayonnement cohérent et possédant un détecteur de mesure (35, 66) pour fournir un résultat de mesure ; et

un élément optique (52, 90) placé avant l'unité réceptrice pour diriger le faisceau primaire et le faisceau secondaire de rayonnement vers le détecteur de mesure, dans lequel le détecteur de mesure comprend une surface de détecteur (36, 68) sur laquelle le faisceau primaire et le faisceau secondaire sont incidents avec interférence et des moyens pour détecter l'interférence et pour fournir un résultat de mesure basé sur ladite détection ; **caractérisé par** :

un dispositif de balayage adapté pour balayer la longueur d'onde de la sortie de la source de rayonnement cohérent sur une plage d'absorption de gaz à détecter ; et

des moyens (48, 50 ; 86) pour diriger le faisceau secondaire en direction de l'unité réceptrice le long d'un chemin optique supplémentaire de manière à ce que le faisceau secondaire soit retardé par rapport au faisceau primaire ; et dans lequel :

l'élément optique comprend un combinateur de faisceau optique (52, 90) qui combine le faisceau primaire et le faisceau secondaire pour donner un faisceau combiné et qui produit dans le faisceau combiné une divergence entre le rayonnement cohérent provenant du faisceau primaire et le rayonnement cohérent provenant du faisceau secondaire, moyennant quoi le balayage de longueur d'onde et le retard entre les chemins optiques génèrent sur la surface de détecteur un profil de franges d'interférence en mouvement ; et

le moyen de détection détecte le profil de franges d'interférence en mouvement pour fournir ledit résultat de mesure.

2. Système de détection de gaz selon la revendication 1, **caractérisé en ce que** l'unité émettrice comprend un laser (30, 62).

3. Système de détection de gaz selon la revendication 1 ou 2, **caractérisé en ce que** le chemin optique supplémentaire est au moins partiellement défini par un guide de lumière à fibres optiques (86) pour transmettre le faisceau secondaire vers le combinateur de faisceau optique.

4. Système de détection de gaz selon l'une quelconque des revendications précédentes, **caractérisé en ce qu'**un retard optique (78) est inclus dans le chemin optique primaire.

5. Système de détection de gaz selon la revendication 4, **caractérisé en ce que** le retard optique comprend une longueur de fibre optique.

6. Système de détection de gaz selon l'une quelconque des revendications précédentes, **caractérisé en outre par** un détecteur de référence (94) servant à détecter un signal de référence dérivant du faisceau secondaire.

7. Système de détection de gaz selon l'une quelconque des revendications précédentes, **caractérisé en outre par** un arrangement de commande servant à ajuster le chevauchement du faisceau primaire et du faisceau secondaire au niveau du détecteur de mesure.

8. Système de détection de gaz selon la revendication 7, **caractérisé en ce que** l'arrangement de commande est agencé de manière à ajuster soit le foyer d'au moins un faisceau choisi parmi le faisceau primaire et le faisceau secondaire sur le détecteur de mesure, soit la position d'un élément optique (86, 88) du chemin optique supplémentaire, soit la position du détecteur de mesure.

9. Système de détection de gaz selon l'une quelconque des revendications précédentes, **caractérisé en ce que** l'angle de divergence entre le faisceau primaire et le faisceau secondaire est inférieur ou égal à 0,2 degré.

10. Procédé de détection d'un gaz pour détecter un gaz cible, comprenant :

l'utilisation d'une unité émettrice (26, 60) comprenant une source (30 ; 62) de rayonnement cohérent ;

l'orientation d'un faisceau primaire du rayonnement cohérent à une longueur d'onde absorbée par le gaz cible le long d'un chemin optique primaire à travers un espace de détection de gaz cible (34, 82) en direction d'une unité réceptrice (28, 64) ;

la séparation du faisceau primaire de manière à générer un faisceau secondaire du rayonnement cohérent ;

le passage du faisceau primaire et du faisceau secondaire de rayonnement à travers un élément optique pour diriger les faisceaux vers l'unité réceptrice ;

la réception des faisceaux sur l'unité réceptrice avec interférence ; et

la détection de l'interférence sur la surface de détecteur d'un détecteur de mesure pour fournir un résultat de mesure ;
et **caractérisé par** :

le balayage de la longueur d'onde de la sortie de la source de rayonnement cohérent pour balayer le faisceau primaire sur une plage d'absorption de gaz à détecter ;
l'orientation du faisceau secondaire en direction de l'unité réceptrice le long d'un chemin optique supplémentaire de manière à ce que le faisceau secondaire soit retardé par rapport au faisceau primaire ;
la production au moyen de l'élément optique d'un faisceau combiné dans lequel il existe une divergence entre le faisceau primaire et le faisceau secondaire, moyennant quoi le balayage de longueur d'onde et le retard entre les chemins optiques génèrent sur la surface de détecteur un profil de franges d'interférence en mouvement ; et
la détection du profil de franges d'interférence en mouvement pour fournir ledit résultat de mesure.

11. Procédé de détection de gaz selon la revendication 10, **caractérisé en outre par** l'utilisation d'un guide de lumière à fibres optiques (78) pour transmettre le faisceau secondaire en guise de chemin optique supplémentaire.

12. Procédé de détection de gaz selon la revendication 10 ou 11, **caractérisé en outre par** l'introduction d'un retard optique dans le chemin optique primaire.

13. Procédé de détection de gaz selon l'une quelconque des revendications 10 à 12, **caractérisé en outre par** la détection d'un signal de référence dérivant du faisceau secondaire.

14. Procédé de détection de gaz selon l'une quelconque des revendications 10 à 13, **caractérisé en outre par** le contrôle du chevauchement du faisceau primaire et du faisceau secondaire au niveau du détecteur de mesure (35, 66) pour détecter les franges d'interférence.

15. Procédé de détection de gaz selon la revendication 14, **caractérisé en ce que** le chevauchement est contrôlé soit par l'ajustement du foyer d'au moins un faisceau choisi parmi le faisceau primaire et le faisceau secondaire, soit par l'ajustement de la position d'un élément optique (86, 88) du chemin optique supplémentaire, soit par l'ajustement de la position du détecteur de mesure.

16. Procédé de détection de gaz selon l'une quelconque des revendications 10 à 15, **caractérisé par** le contrôle de l'angle de divergence entre le faisceau primaire et le faisceau secondaire à une valeur inférieure ou égale à 0,2 degré.

FIG. 1

FIG. 2

Interference pattern viewed on screen

Light Intensity

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2353591 A
- EP 04257895 A
- WO 2004025324 A
- US 5345306 A
- DE 4201922 A